# EUROPEAN PATENT APPLICATION

(11) **EP 1 233 543 A1**
(43) Date of publication of application: **21.08.2002**
(21) Application number: 01970213.3
(22) Date of filing: 26.09.2001
(51) Int. Cl.: H04B 7/06, H04B 7/10, H04B 7/26

(54) **BASE STATION DEVICE AND RADIO TRANSMITTING METHOD**

(30) Priority: 27.09.2000 JP 2000293644
(71) Applicant: MATSUSHITA ELECTRIC INDUSTRIAL CO., LTD., Kadoma-shi, Osaka 571-8501 (JP)
(72) Inventor: AOYAMA, Takahisa, Yokosuka-shi, Kanagawa 239-0841 (JP); MIYOSHI, Kenichi, Yokohama-shi, Kanagawa 236-0058 (JP)
(74) Representative: Grünecker, Kinkeldey, Stockmair & Schwanhäusser Anwaltssozietät
(86) International application number: JP0108350
(87) International publication number: WO02027971

(57) **Abstract**

Direction of arrival estimation sections (107) and (108) estimate the directions of arrival of signals from a plurality of communication terminal apparatuses, decision circuit (110) detects communication terminal apparatuses whose directions of arrival of signals are close to one another based on the estimated direction of arrival information, transmission weight generation circuit (111) forms transmission directivity common to the communication terminal apparatuses detected by decision circuit (110) and transmits signals by radio to communication terminal apparatuses (151) and (152) whose directions of arrival of signals are close to one another using the common transmission directivity.

## Description

### Technical Field

The present invention relates to a base station apparatus using an adaptive array antenna technology that transmits/receives signals by adaptively controlling directivity.

### Background Art

For digital radio communications, an adaptive array antenna (hereinafter referred to as "AAA") technology, which adaptively controls directivity by assigning weights to antenna outputs of a plurality of antenna elements, is expected to be as a performance improvement technology. This AAA technology can suppress interference signals by adaptively controlling directivity taking advantage of the fact that the direction of arrival varies from one received signal to another. Thus, this adaptive array antenna technology is suitable as a method for eliminating interference signals on a same channel.

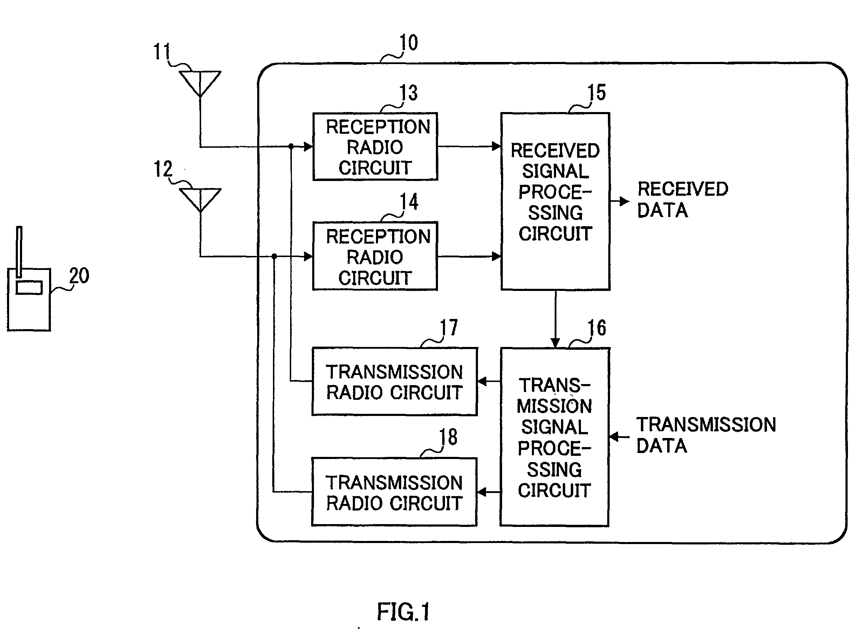

FIG.1 is a block diagram showing a configuration of a base station apparatus using a conventional AAA technology. Hereinafter, the base station apparatus using the AAA technology will be simply referred to as an "AAA base station apparatus". FIG.1 shows a base station apparatus equipped with an array antenna made up of two antenna elements as an example. In addition, a normal base station apparatus is equipped with a plurality of systems of a received signal processing circuit and transmission signal processing circuit to communicate with a plurality of communication terminal apparatuses, but FIG.1 describes a case where only one system of a received signal processing circuit and transmission signal processing circuit is provided for simplicity of explanation.

When communicating with communication terminal apparatus 20, base station apparatus 10 shown in FIG.1 receives a signal from communication terminal apparatus 20 using antennas 11 and 12. The signal received from antenna 11 is down-converted to an intermediate frequency band and then to a base frequency band by reception radio circuit 13 and output to received signal processing circuit 15. On the other hand, the signal received from antenna 12 is down-converted to an intermediate frequency band and a base frequency band by reception radio circuit 14 and output to received signal processing circuit 15. Received signal processing circuit 15 performs demodulation processing on the received signal. Received signal processing circuit 15 also adjusts a complex coefficient (reception weight) to be multiplied on the received signal. This allows the array antenna to receive only an electromagnetic signal arriving from a desired direction strongly. Thus, receiving only an electromagnetic signal arriving from a desired direction strongly refers to as "having reception directivity" or "forming reception directivity". By having reception directivity, the base station apparatus can keep a reception SIR (Signal to Interference Ratio: hereinafter referred to as "SIR" ) high. The configuration of received signal processing circuit 15 is determined by the communication system, etc. used.

On the other hand, during transmission, transmission signal processing circuit 16 performs modulation processing on transmission data. Furthermore, transmission signal processing circuit 16 generates a complex coefficient (transmission weight) to be multiplied on the transmission signal using the estimation result of the direction of arrival estimated by reception signal processing circuit 15. This transmission weight is generated for every communication terminal apparatus of the communication partner. This allows the array antenna to transmit an electromagnetic signal strongly only in a desired direction. Thus, transmitting an electromagnetic signal strongly only in a desired direction refers to as "having transmission directivity" or "forming transmission directivity". The communication terminal apparatus that has received a signal sent with transmission directivity from the base station apparatus can keep the reception SIR high. The configuration of transmission signal processing circuit 16 is determined by the communication system, etc. used. The transmission signal multiplied by a transmission weight is up-converted to a radio frequency band by transmission radio circuits 17 and 18 and sent from antennas 11 and 12 to communication terminal apparatus 20.

However, the conventional AAA base station apparatus generates a transmission weight for every communication terminal apparatus of the communication partner individually, and therefore there is a problem that the processing load increases. Furthermore, even if the directions of arrival of signals received from communication terminal apparatuses of the communication partner are close to one another, the conventional AAA base station apparatus transmits a transmission signal multiplied by a transmission weight generated for every communication terminal apparatus, and therefore there is also a problem that orthogonality among communication terminal apparatuses in communication is lost and interference is generated.

### Disclosure of Invention

It is an object of the present invention to provide a base station apparatus and radio transmission method capable of, even if the directions of arrival of signals from communication terminal apparatuses of the communication partner are close to one another, preventing interference among codes caused by loss of orthogonality and reducing the amount of calculation to generate transmission weights.

A first subject of the present invention is that when a base station equipped with an array antenna communicates with a plurality of communication terminal apparatuses and the directions of arrival of signals from those communication terminal apparatuses of the communication partner are close to one another, the base station forms transmission directivity common to those communication terminal apparatuses and transmits signals to the respective communication terminal apparatuses with this transmission directivity.

A second subject of the present invention is that when a base station equipped with an array antenna which communicates with a plurality of communication terminal apparatuses detects a communication terminal apparatus that receives a predetermined amount or more of interference from other communication terminal apparatuses, the base station forms transmission directivity in a reference direction shifted away from the direction of arrival of the signal from the communication terminal apparatus receiving the predetermined amount or more of interference.

### Brief Description of Drawings

FIG.1 is a block diagram showing a configuration of a base station apparatus using a conventional AAA technology;
FIG.2 is a block diagram showing a configuration of a base station apparatus according to Embodiment 1 of the present invention;
FIG.3 illustrates directions of arrival of signals received from communication terminal apparatuses;
FIG.4 illustrates transmission directivity patterns created for the respective communication terminal apparatuses individually;
FIG.5 illustrates a common transmission directivity pattern created when it is decided that the directions of arrival of signals from the communication terminal apparatuses are close to each other;
FIG.6 is a block diagram showing a configuration of a base station apparatus according to Embodiment 2 of the present invention;
FIG.7 is a block diagram showing a configuration of a base station apparatus according to Embodiment 3 of the present invention;
FIG.8 illustrates a transmission directivity pattern formed in the same direction as a direction of arrival of a desired signal;
FIG.9 illustrates a transmission directivity pattern after a shift;
FIG.10 is a block diagram showing a configuration of a base station apparatus according to Embodiment 4 of the present invention;
FIG.11 is a block diagram showing a configuration of a base station apparatus according to Embodiment 5 of the present invention;
FIG.12 illustrates a common transmission directivity pattern created considering the quality of a channel state; and
FIG.13 is a block diagram showing a configuration of a base station apparatus according to Embodiment 6 of the present invention.

### Best Mode for Carrying out the Invention

With reference now to the attached drawings, embodiments of the present invention will be explained below.

### (Embodiment 1)

When the directions of arrival of signals from a plurality of communication terminal apparatuses of the communication partner are close to one another, a base station apparatus according to Embodiment 1 forms transmission directivity common to those communication terminal apparatuses and sends signals to those communication terminal apparatuses using this transmission directivity. That is, when forming transmission directivity, the base station apparatus according to Embodiment 1 monitors relationships among the respective communication terminal apparatuses from the standpoint of directions of arrival of signals.

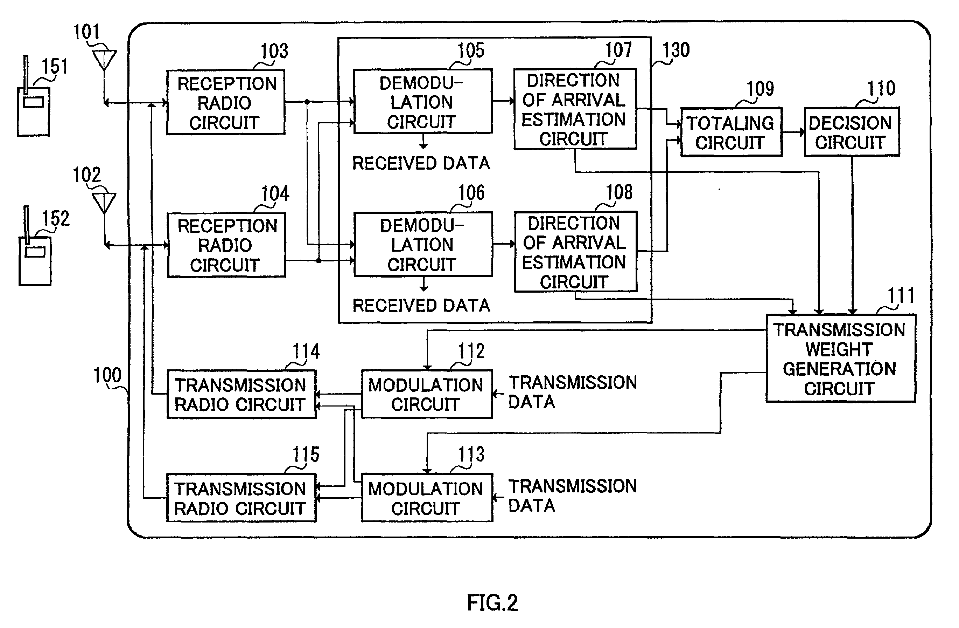

FIG.2 is a block diagram showing a configuration of the base station apparatus according to Embodiment 1 of the present invention. Here, a case where base station apparatus 100 performs radio communications with communication terminal apparatuses 151 and 152 will be explained.

Reception radio circuits 103 and 104 perform predetermined radio processing (down-conversion, A/D conversion, etc.) on signals received from antennas 101 and 102.

Baseband signals processed by the respective reception radio circuits 103 and 104 are sent to baseband signal processing circuit 130. Normally, the base station apparatus is equipped with a plurality of systems of baseband signal processing circuits to demodulate signals received from a plurality of communication terminal apparatuses. For simplicity of explanation, this embodiment assumes two communication terminal apparatuses and provides two processing systems (demodulation circuit 105 and direction of arrival estimation circuit 107, and demodulation circuit 106 and direction of arrival estimation circuit 108) in baseband signal processing circuit 130 accordingly.

Demodulation circuits 105 and 106 carry out baseband processing such as CDMA demodulation on the received signals from corresponding communication terminal apparatuses 151 and 152 to obtain received data. Direction of arrival estimation circuits 107 and 108 perform adaptive signal processing on the received signals from communication terminal apparatuses 151 and 152 to estimate the directions of arrival of desired signals from the respective communication terminal apparatuses. Totaling circuit 109 totals direction of arrival information from communication terminal apparatuses 151 and 152, which are the outputs from direction of arrival estimation circuits 107 and 108. This direction of arrival information is angle information expressed with angles relative to the antenna front direction of base station apparatus 100.

With reference to the direction of arrival information output from totaling circuit 109, decision circuit 110 calculates an angle difference in the directions of arrival from communication terminal apparatuses 151 and 152 and decides the calculated difference in comparison with a threshold.

When decision circuit 110 decides that the directions of arrival of the signals from the communication terminal apparatuses of the communication partner are close to each other, transmission weight generation circuit 111 forms transmission directivity common to both communication terminal apparatuses. Transmission weight generation circuit 111 actually generates a common transmission weight to implement common transmission directivity. This common transmission directivity is formed in the quasi-middle of the directions of arrival (direction at an average angle relative to the antenna front direction in the directions of arrival of signals) of the signals from the respective communication terminal apparatuses estimated by direction of arrival estimation circuits 107 and 108. In addition, when the reception system calculates reception weights to have reception directivity, it is possible to generate transmission weights so that transmission directivity is formed in the quasi-middle of the directions of arrival of signals from the respective communication terminal apparatuses by applying appropriate processing to the reception weights.

On the other hand, when decision circuit 110 decides that the directions of arrival of the signals from the communication terminal apparatuses of the communication partner are not close to each other, decision circuit 110 references the direction of arrival estimated by directions of arrival estimation circuits 107 and 108 and generates individual transmission weights for the respective communication terminal apparatuses. The method of generating a transmission weight in this case includes a method of using the reception weight as is or a method of converting the reception weight generated according to a predetermined system when the base station apparatus uses different frequencies for reception and transmission, and so on.

Then, the transmission system will be explained block by block. Modulation circuits 112 and 113 perform predetermined modulation processing such as CDMA modulation on transmission data. Furthermore, modulation circuits 112 and 113 multiply the modulated signals by the transmission weights generated by transmission weight generation circuit 111 to generate transmission signals. Transmission radio circuits 114 and 115 perform predetermined transmission processing (down-conversion, D/A conversion, etc.) on the transmission signals. Since the base station apparatus of this embodiment has the array antenna transmission function using two antennas, the base station apparatus is provided with two antennas and two transmission radio circuits.

Then, an operation of base station apparatus 100 in the above-described configuration will be explained.

Signals sent from communication terminal apparatuses 151 and 152 are received by reception radio circuits 103 and 104 through antennas 101 and 102, subjected there to predetermined radio reception processing and sent to demodulation circuits 105 and 106. Demodulation circuits 105 and 106 perform processing such as CDMA demodulation on the signals sent from communication terminal apparatuses 151 and 152 and received from reception radio circuits 103 and 104 and send the signals to respective direction of arrival estimation circuits 107 and 108. The direction of arrival estimation circuits 107 and 108 perform direction of arrival estimation processing on the received signals.

There are direction of arrival estimation methods such as a MUSIC method, ESPRIT method, beam former method using FFT (Fast Fourier Transform), linear prediction method and minimum norm method, but there are no particular restrictions. Then, direction of arrival estimation circuits 107 and 108 output the direction of arrival estimation results obtained to totaling circuit 109.

Totaling circuit 109 totals the direction of arrival estimation results to ascertain the directions of arrival of the desired signals from communication terminal apparatuses 151 and 152. Totaling circuit 109 totals the estimation results by associating the respective communication terminal apparatuses with angles in the directions of arrival relative to the antenna front direction. Totaling circuit 109 outputs the direction of arrival information (angle information) of the desired signals from communication terminal apparatuses 151 and 152 to decision circuit 110.

To decide whether the directions of arrival of the signals from the communication terminal apparatuses of the communication partner are close to each other or not, decision circuit 110 decides the difference in the directions of arrival of the signals from communication terminal apparatuses 151 and 152 in comparison with a threshold.

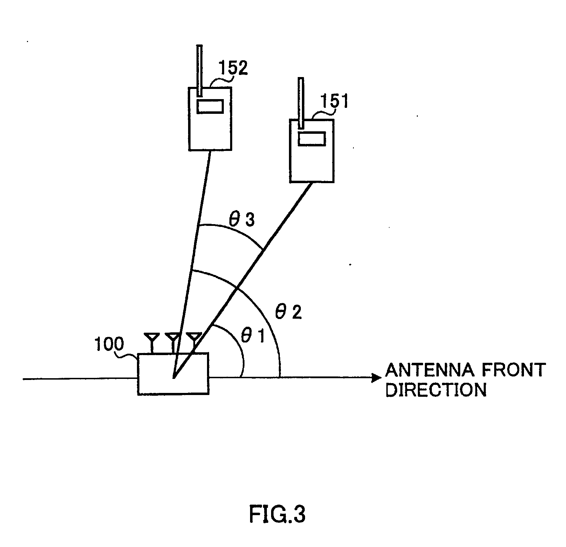

Threshold decision at decision circuit 110 will be explained with reference to FIG.3. As shown in FIG.3, direction of arrival estimation circuits 107 and 108 estimate the directions of arrival of the desired signals from communication terminal apparatuses 151 and 152 as θ1 and θ2. These angles θ1 and θ2 indicating the directions of arrival are angles relative to the antenna front direction. Decision circuit 110 determines the difference (θ3 = |θ1 - θ2|) in the direction of arrival between the incoming signals (received signals) from communication terminal apparatuses 151 and 152 and decides this difference by comparing it with a predetermined threshold.

This threshold decision is performed to decide whether the directions of arrival of the signals from communication terminal apparatuses of the communication partner are close to each other or not. Therefore, when the difference of angles in the direction of arrival is smaller than the predetermined threshold, decision circuit 110 decides that the directions of arrival of the signals from the communication terminal apparatuses of the communication partner are close to each other. On the contrary, when the difference of angles in the direction of arrival is greater than the predetermined threshold, decision circuit 110 decides that the directions of arrival of the signals from the communication terminal apparatuses of the communication partner are not close to each other. This threshold is preset, but can be changed by the system taking into account errors in direction of arrival estimations, etc. as appropriate.

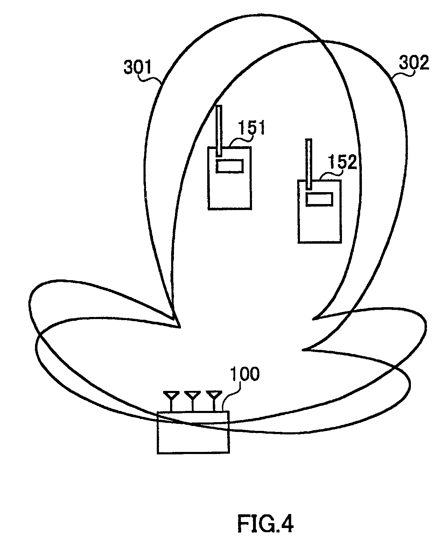

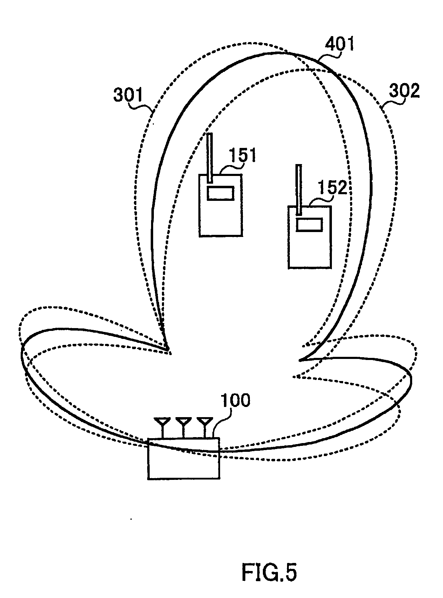

When decision circuit 110 decides that the directions of arrival of the signals from the communication terminal apparatuses of the communication partner are close to each other, transmission weight generation circuit 111 generates a transmission weight common to both communication terminal apparatuses. Principles of generation of transmission weights at transmission weight generation circuit 111 will be explained with reference to FIG.4 and FIG.5. First, FIG.4 shows transmission directivity patterns individually generated for the respective communication terminal apparatuses as in the case of the conventional art.

As shown in FIG.4, when the conventional base station apparatus estimates from a received signal the direction of arrival of the received signal, the base station apparatus generates transmission directivities separately for communication terminal apparatuses 151 and 152. That is, the base station apparatus generates directivity pattern 301 for communication terminal apparatus 151 and directivity pattern 302 for communication terminal apparatus 152 separately.

Then, with respect to this embodiment FIG.5 shows a transmission directivity pattern common to the communication terminal apparatuses whose directions of arrival of signals are close to each other, generated when decision circuit 110 decides that the directions of arrival of the signals from the communication terminal apparatuses are close to each other. As shown in this FIG.5, base station apparatus 100 according to this embodiment forms directivity pattern 401 common to communication terminal apparatuses 151 and 152 whose directions of arrival of signals are close to each other with reference to the estimated directions of arrival of received signals. Directivity pattern 401 is formed in such a way as to maximize a gain in the quasi-middle of the directions of arrival of the desired signals from communication terminal apparatuses 151 and 152. Transmission weight generation circuit 111 generates a transmission weight to realize directivity pattern 401 shown in FIG.5.

Thus, generating a common directivity pattern eliminates the need to generate transmission weights individually and thereby reduces the processing load drastically. Furthermore, according to the conventional method of forming transmission directivities separately shown in FIG.4, orthogonality between the signal sent to communication terminal apparatus 151 and the signal sent to communication terminal apparatus 152 is lost, while according to the method of forming common directivity according to this embodiment shown in FIG.5, orthogonality is obviously not lost, and therefore no interference occurs due to loss of orthogonality.

The transmission signals multiplied by the common transmission weight generated in this way are subjected to predetermined radio transmission processing by transmission radio circuits 114 and 115 and sent to communication terminal apparatuses 151 and 152.

Thus, the base station apparatus of this embodiment forms transmission directivity common to a plurality of communication terminal apparatuses, sends signals with this transmission directivity, and thereby eliminates the need to generate a transmission weight for each communication terminal apparatus, which allows a drastic reduction in the amount of calculation. Furthermore, combining despread signals to be sent to the communication terminal apparatuses with common transmission directivity and then multiplying a transmission weight makes it possible to reduce transmission weight multiplication processing, which has been conventionally carried out for each communication terminal apparatus.

In a CDMA radio communication, a transmission signal to each communication terminal is orthogonalized, and therefore it is possible to eliminate inter-code interference. However, when a communication is carried out using a transmission weight, which varies from one communication terminal apparatus to another as in the case of a conventional transmission with directivity, this orthogonality is lost. According to this configuration, signals are transmitted with transmission directivity common to a plurality of communication terminal apparatuses, which makes it possible to transmit transmission signals orthogonalized to the communication terminal apparatuses whose directions of arrival of signals are close to each other.

This embodiment describes a case where the base station apparatus is communicating with two communication terminal apparatuses as an example, but there can be three or more communication terminal apparatuses that communicate with the base station apparatus . In this case, it is possible to select a reference communication terminal apparatus from among the communication terminal apparatuses with which to communicate, calculate angle differences in directions of arrival of signals between this reference communication terminal apparatus and other communication terminal apparatuses, detect communication terminal apparatuses whose calculated differences are smaller than a predetermined threshold and form transmission directivity common to those detected communication terminal apparatuses and send signals with that common transmission directivity. Even if the directions of arrival of signals from three or more communication terminal apparatuses are close to one another, this makes it possible to form transmission directivity common to the communication terminal apparatuses whose directions of arrival of signals are close to one another. Thus, even if the directions of arrival of signals from three or more communication terminal apparatuses are close to one another, the base station apparatus of this embodiment can reduce the amount of calculation and at the same time carry out transmission with transmission signals orthogonalized.

### (Embodiment 2)

Embodiment 2 is an example of modification to Embodiment 1 in which case the current position of a mobile unit is detected using a positioning technology (hereinafter referred to as "positioning") to recognize the current position of the mobile unit and the direction of the communication terminal apparatus (that is, the direction of arrival of a desired signal) is recognized from the detected current position of the mobile unit. That is, this embodiment is different from Embodiment 1 in that the position of a communication terminal apparatus is detected through positioning and the direction of the communication terminal apparatus with respect to the base station apparatus is recognized based on the position information.

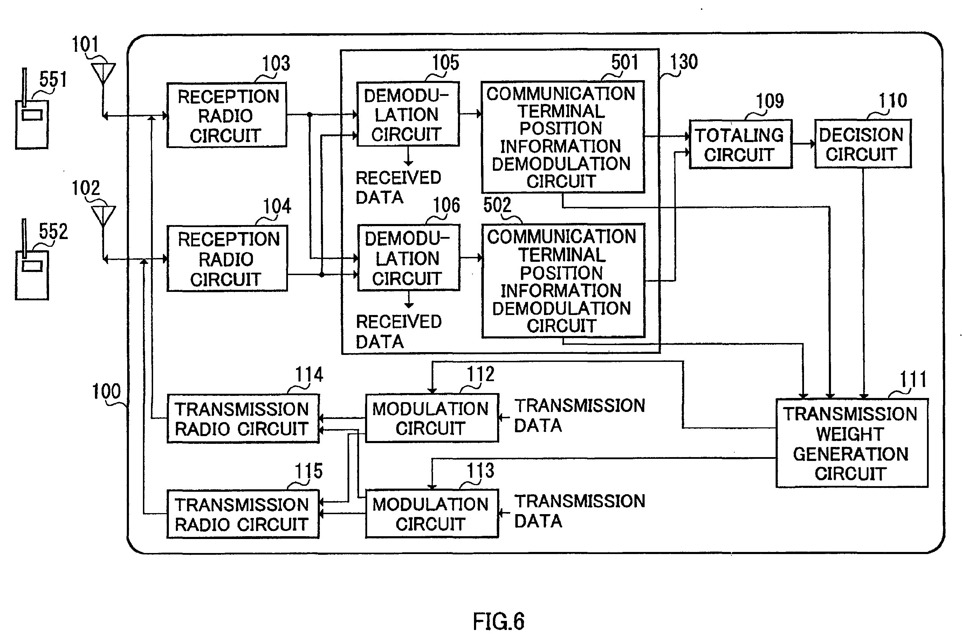

FIG.6 is a block diagram showing a configuration of a base station apparatus according to Embodiment 2 of the present invention. In FIG.6, the same components as those in FIG.2 are assigned the same reference numerals as those in FIG.2 and detailed explanations thereof will be omitted. Here, a case where GPS (Global Positioning System) is used as the positioning technology will be explained as an example.

Communication terminal apparatuses 551 and 552 are each equipped with a GPS receiver. Communication terminal apparatuses 551 and 552 receive signals sent from a satellite and recognize the positions of the own apparatuses from time information included in the received signals, position information of the satellite and the time of a local clock owned by each GPS receiver. Communication terminal apparatuses 551 and 552 insert the position information of the own apparatuses obtained in this way into the transmission signals and send to base station apparatus 100.

At base station apparatus 100, communication terminal position information demodulation circuits 501 and 502 extract position information from the received signals and demodulate the extracted position information. Communication terminal position information demodulation circuits 501 and 502 can recognize the directions of communication terminal apparatuses 551 and 552 viewed from base station apparatus 100 (that is, the directions of arrival of the desired signals from communication terminal apparatuses 551 and 552) with reference to the demodulated position information.

By demodulating the position information included in the received signals, the base station apparatus in the above-described configuration recognizes the directions of communication terminal apparatuses 551 and 552 relative to the antenna front direction (the directions of arrival of the signals from communication terminal apparatuses 551 and 552) and decides whether the directions of arrival of the signals from the respective communication terminal apparatuses are close to each other or not by deciding the difference of angles indicating these directions in comparison with a threshold. In the case where the base station apparatus decides that the directions of arrival of the signals from the respective communication terminal apparatuses are close to each other, the base station apparatus generates a transmission weight common to the respective communication terminal apparatuses.

Thus, the base station apparatus according to this embodiment can recognize the directions of the communication terminal apparatuses by demodulating position information included in the received signals and thereby eliminate the need to carry out direction of arrival estimation processing. Therefore, the base station apparatus of this embodiment can reduce the amount of processing for forming reception directivity and transmission directivity.

### (Embodiment 3)

Upon detection of a communication terminal apparatus, which is receiving interference in excess of a predetermined amount from other communication terminal apparatuses, a base station apparatus according to Embodiment 3 forms transmission directivity in a reference direction shifted away from the communication terminal apparatus receiving interference in excess of the predetermined amount and sends signals with that transmission directivity. That is, the base station apparatus according to this embodiment monitors mutual relationships among communication terminal apparatuses from an aspect of phenomenon (amount of interference) in forming transmission directivity.

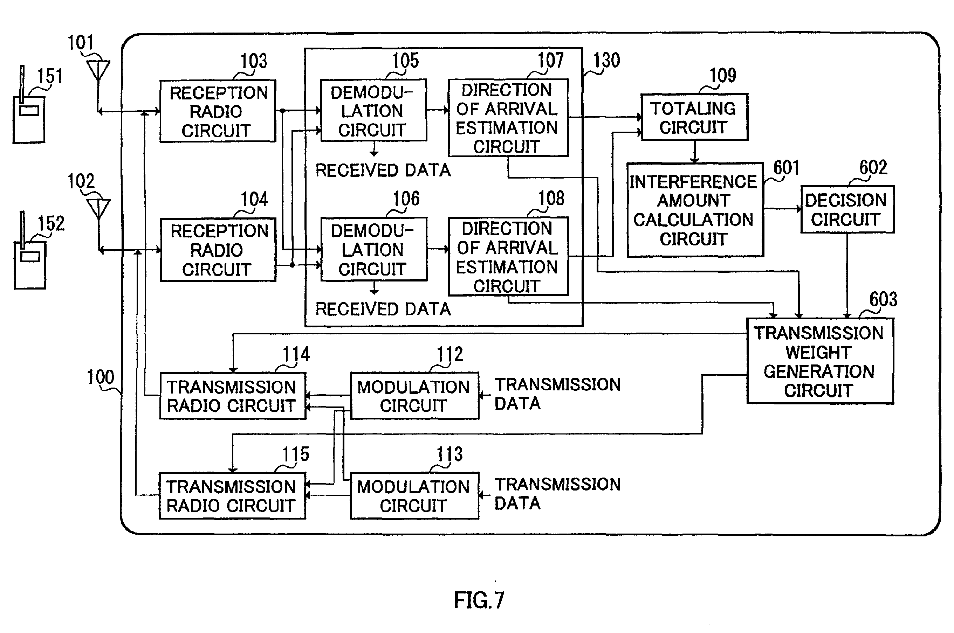

FIG.7 is a block diagram showing a configuration of the base station apparatus according to Embodiment 3 of the present invention. In FIG.7, the same components as those in FIG.2 are assigned the same reference numerals as those in FIG.2 and detailed explanations thereof will be omitted.

With reference to direction of arrival information of communication terminal apparatuses 151 and 152 totaled by totaling circuit 109, interference amount calculation circuit 601 calculates the amount of interference that communication terminal apparatus 151 receives and the amount of interference that communication terminal apparatus 152 receives.

Decision circuit 602 decides the amount of interference received by each communication terminal apparatus and calculated by interference amount calculation circuit 601 in comparison with a threshold. This threshold decision is performed by comparing interference generated among communication terminal apparatuses of the communication partner with an allowable amount of interference for the system (hereinafter referred to as "tolerance") to determine which is greater or smaller. Hereinafter, a communication terminal apparatus that receives an amount of interference in excess of tolerance will be referred to as an "interfered terminal". Decision circuit 602 detects this interfered terminal.

Transmission weight generation circuit 603 forms transmission directivity in a reference direction shifted away from the interfered communication terminal apparatus detected by decision circuit 602. Transmission weight generation circuit 603 forms transmission directivity for each communication terminal apparatus to which a signal is sent. As the reference direction, for example, the direction of arrival of a signal from the communication terminal apparatus to which a signal is sent can be used. Transmission weight generation circuit 603 actually generates a transmission weight to implement the transmission directivity in the above-described shifted direction.

On the other hand, when decision circuit 602 detects no interfered terminal, transmission weight generation circuit 603 forms transmission directivity in the same directions as the directions of arrival (directions of the respective communication terminal apparatus) of the desired signals estimated by direction of arrival estimation circuits 107 and 108.

Then, an operation of base station apparatus 100 in the above-described configuration will be explained.

Signals sent from communication terminal apparatuses 151 and 152 are received by reception radio circuits 103 and 104 through antennas 101 and 102 and subjected to processing such as CDMA demodulation by demodulation circuits 105 and 106. The demodulated data are output to direction of arrival estimation circuits 107 and 108. Direction of arrival estimation circuits 107 and 108 perform direction of arrival estimation processing on the received signals and output the direction of arrival estimation results to totaling circuit 109. Totaling circuit 109 totals the direction of arrival estimation results and outputs direction of arrival information of the signals from communication terminal apparatuses 151 and 152 to interference amount calculation circuit 601.

Interference amount calculation circuit 601 calculates the amount of interference of communication terminal apparatuses 151 and 152 with reference to the direction of arrival information of communication terminal apparatuses 151 and 152 totaled by totaling circuit 109. Decision circuit 602 decides the amount of interference calculated by interference amount calculation circuit 601 in comparison with a threshold and detects the interfered terminal.

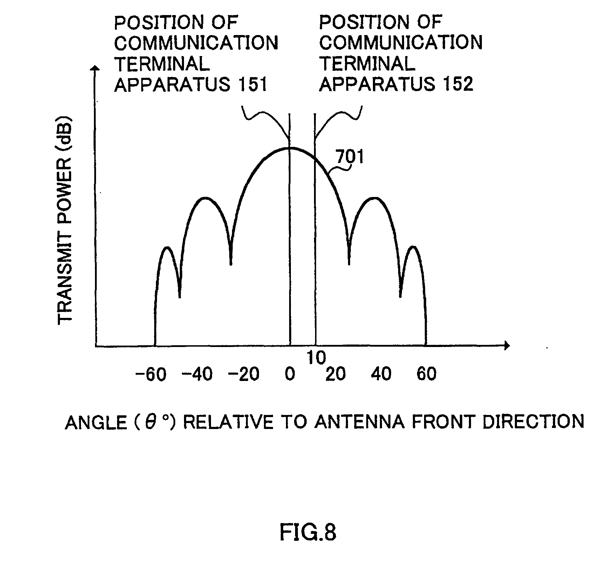

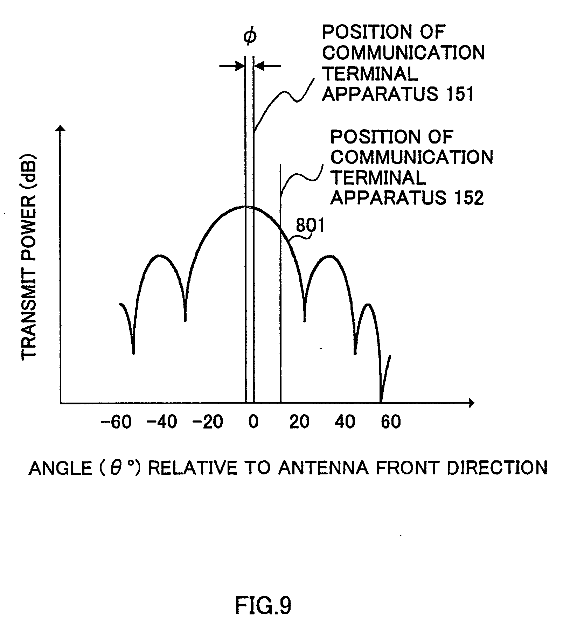

Here, generation of transmission weights at transmission weight generation circuit 603 will be explained using FIG.8 and FIG.9. FIG.8 illustrates a transmission directivity pattern formed in the same direction as a direction of arrival of a desired signal as in the case of the conventional art and FIG.9 illustrates a transmission directivity pattern formed in a direction shifted from a reference direction. Here, a case where communication terminal apparatus 152 becomes an interfered terminal due to interference received from communication terminal apparatus 151 will be explained as an example.

In FIG.8, directivity pattern 701 is a transmission directivity pattern formed in the same direction as the direction of arrival of the signal from communication terminal apparatus 151 (direction in which communication terminal apparatus 151 is located when viewed from base station apparatus 100). Directivity pattern 701 is formed based on the direction of arrival information totaled by totaling circuit 109. Here, suppose communication terminal apparatus 151 is located in the direction of 0° and communication terminal apparatus 152 is located in the direction of 10°.

As is apparent from FIG.8, the transmission signal to communication terminal apparatus 151 constitutes interference with communication terminal apparatus 152. The closer the direction of arrival of the signal from the communication terminal apparatus (the smaller the angle difference in the directions of arrival from the respective communication terminal apparatuses), the greater this interference becomes. Furthermore, the greater transmit power, the greater the interference with other stations becomes.

Therefore, when the amount of interference exceeds tolerance, the base station apparatus of this embodiment forms transmission directivity shifted away from the direction of arrival of the signal from the communication terminal apparatus, which is receiving interference. FIG.9 shows a transmission directivity pattern after the above-described transmission directivity is shifted. Transmission directivity pattern 801 is formed by shifting directivity pattern 701 to the minus direction on the horizontal axis of the graph shown in FIG.8 by shift width φ. Shift width φ is shift width φ corresponding to the calculated amount of interference read from a table showing the correspondence between the amount of interference received and shift width φ pre-stored in the base station apparatus. The amount of interference that communication terminal apparatus 152 receives is set in such away as to be smaller than tolerance. Thus, the transmission directivity (directivity pattern 801) of the signal sent to communication terminal apparatus 151 is formed in a direction shifted (direction of 10°) away (minus direction on the horizontal axis of the graph shown in FIG.8) from communication terminal apparatus 152, which is the interfered terminal, relative to the direction of arrival of the signal received from communication terminal apparatus 151 (that is, direction of communication terminal apparatus 151 viewed from the base station apparatus).

In a comparison between FIG.8 and FIG.9, when directivity pattern 801 is formed, the transmit power of the signal sent to communication terminal apparatus 151 is smaller in the location of communication terminal apparatus 152 than when directivity pattern 701 is formed, and therefore interference with communication terminal apparatus 152 decreases.

Transmission weight generation circuit 603 generates a transmission weight to implement directivity pattern 801 after the shift. The transmission signal multiplied by the transmission weight generated in this way is subjected to predetermined radio transmission processing by transmission radio circuits 114 and 115 and sent to communication terminal apparatuses 151 and 152.

Thus, the base station apparatus of this embodiment forms transmission directivity of a signal to be sent to communication terminal apparatus 151 in a direction shifted away from communication terminal apparatus 152, which is the interfered terminal relative to the direction of arrival of the signal from communication terminal apparatus 151 and sends the signal with that transmission directivity, and can thereby reduce interference that communication terminal apparatus 152 receives.

### (Embodiment 4)

Embodiment 4 is an example of modification to Embodiment 3 in which case the current position of a mobile unit is detected using a positioning technology (positioning) to recognize the current position of the mobile unit and the direction of the communication terminal apparatus (that is, the direction of arrival of a desired signal) is recognized from the detected current position of the mobile unit. That is, this embodiment is different from Embodiment 3 in that the position of a communication terminal apparatus is detected through positioning and the direction of the communication terminal apparatus with respect to the base station apparatus is recognized based on the position information.

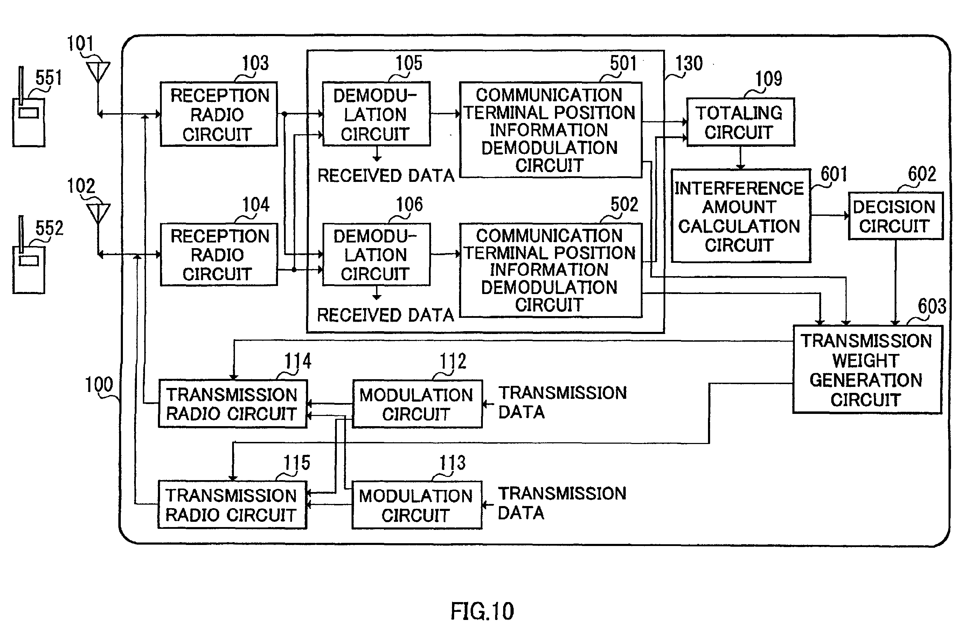

FIG.10 is a block diagram showing a configuration of a base station apparatus according to Embodiment 4 of the present invention. In FIG. 10, the same components as those in FIG. 7 are assigned the same reference numerals as those in FIG.7 and detailed explanations thereof will be omitted. Here, a case where GPS (Global Positioning System) is used as the positioning technology will be explained as an example.

Communication terminal apparatuses 551 and 552 are each equipped with a GPS receiver. Communication terminal apparatuses 551 and 552 receive signals sent from a satellite to recognize the positions of the own apparatuses. Communication terminal apparatuses 551 and 552 insert the position information of the own apparatuses recognized in this way into the transmission signals and send to base station apparatus 100.

At base station apparatus 100, communication terminal position information demodulation circuits 501 and 502 extract position information from the received signals and demodulate the extracted position information. Communication terminal position information demodulation circuits 501 and 502 can recognize the directions of communication terminal apparatuses 551 and 552 viewed from base station apparatus 100 (that is, the directions of arrival of the desired signals from communication terminal apparatuses 551 and 552) with reference to the demodulated position information.

By demodulating the position information included in the received signals in communication terminal position information demodulation circuits 501 and 502, the base station apparatus in the above-described configuration recognizes the directions of communication terminal apparatuses 551 and 552 (that is, the directions of arrival of the signals from communication terminal apparatuses 551 and 552) relative to the antenna front direction and interference amount calculation circuit 601 calculates an amount of interference using the difference of the angles indicating these directions as a parameter. Then, decision circuit 602 decides the amount of interference relative to a threshold to decide whether the amount of interference calculated by interference amount calculation circuit 601 is greater or smaller than tolerance and detects an interfered terminal. When the interfered terminal is detected, transmission weight generation circuit 603 forms transmission directivity in the reference direction shifted away from the interfered terminal and generates a transmission weight to implement this transmission directivity.

Thus, the base station apparatus according to this embodiment can recognize the direction of the communication terminal apparatus by demodulating position information included in the received signal, and therefore eliminates the need to perform direction of arrival estimation processing. Thus, the base station apparatus of this embodiment can reduce the amount of processing to form reception directivity and transmission directivity.

### (Embodiment 5)

Embodiment 5 is an example of modification to Embodiment 1. When the directions of arrival of signals from communication terminal apparatuses are close to each other, the base station apparatus of Embodiment 1 forms common transmission directivity in the quasi-middle of the directions of arrival of desired signals from the respective communication terminal apparatuses. However, since communication states of different communication terminal apparatuses are not the same, the quasi-middle of the directions of arrival of desired signals from the respective communication terminal apparatuses is not necessarily optimal as the direction in which common directivity is formed. Especially when there is a communication terminal apparatus in a bad channel state, forming transmission directivity closer to the direction of arrival of the signal from the communication terminal apparatus in a bad channel state and sending signals with this transmission directivity improves the communication state of the overall system. Thus, when common transmission directivity is formed, the base station apparatus of this embodiment shifts the transmission directivity in a direction closer to the communication terminal apparatus in a bad channel state from a reference direction.

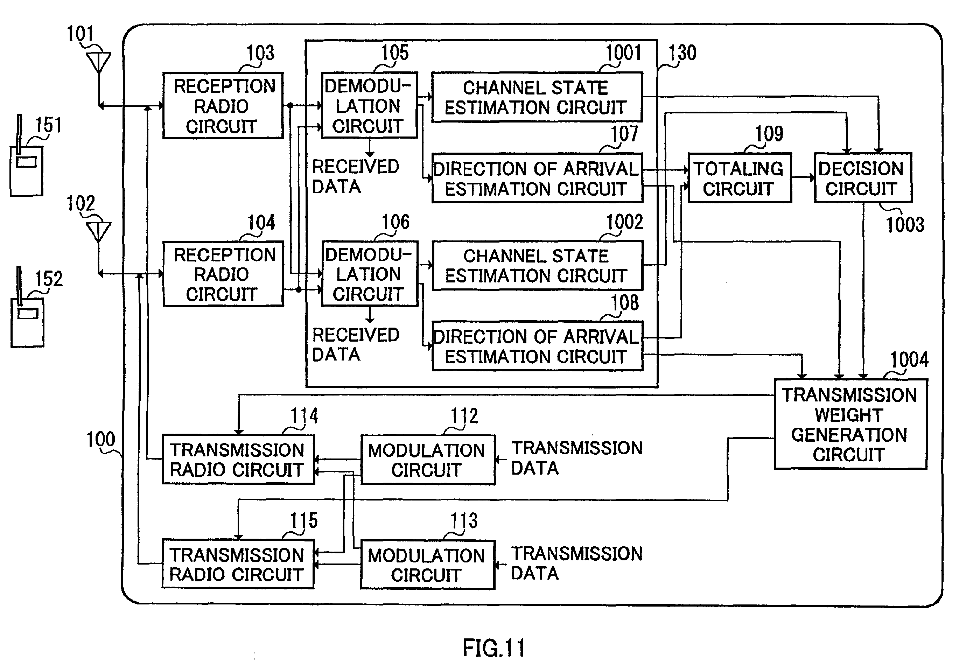

FIG.11 is a block diagram showing a configuration of a base station apparatus according to Embodiment 5 of the present invention. In FIG.11, the same components as those in FIG.2 are assigned the same reference numerals as those in FIG.2 and detailed explanations thereof will be omitted.

Channel state estimation circuits 1001 and 1002 detect the states of channels from base station apparatus 100 to the respective communication terminal apparatuses based on the output of the demodulation circuit. The channel state can be recognized by referencing a TPC command extracted from the received signal at demodulation circuits 105 and 106. That is, when the downlink transmit power under the control the TPC command is high, the channel state can be estimated to be bad and on the contrary when the downlink transmit power under the control the TPC command is low, the channel state can be estimated to be good.

To decide whether the directions of arrival of the signals from the respective communication terminal apparatuses of the communication partner are close to each other or not, decision circuit 1003 determines the angle difference in the directions of arrival in comparison with a threshold. Furthermore, decision circuit 1003 also compares the channel state detection result output from channel state estimation circuit 1001 with the channel state detection result output from channel state estimation circuit 1002 and decides which channel state is worse. The threshold decision result and the channel state decision result are output to transmission weight generation circuit 1004.

When decision circuit 1003 decides that the directions of arrival of the signals from the respective communication terminal apparatuses of the communication partner are close to each other, transmission weight generation circuit 1004 generates a common transmission weight in a direction considering the difference in the channel states of the respective communication terminal apparatuses. That is, transmission weight generation circuit 1004 detects from the output of decision circuit 1003 which channel state is worse, that of communication terminal apparatus 151 or that of communication terminal apparatus 152 and forms transmission directivity in a direction shifted closer to the communication terminal apparatus in a bad communication state from a reference direction (for example, quasi-middle of directions of arrival of the signals from the respective communication terminal apparatuses).

In the base station apparatus in the above-described configuration, the channel state is detected by the downlink transmit power under the control of the TPC command included in the received signals of channel state estimation circuits 1001 and 1002. Decision circuit 1003 determines the angle difference in the directions of arrival to decide whether the directions of arrival of the signals from the respective communication terminal apparatuses are close to each other or not in comparison with a threshold. Furthermore, decision circuit 1003 decides which channel state is worse, that of communication terminal apparatus 151 or that of communication terminal apparatus 152.

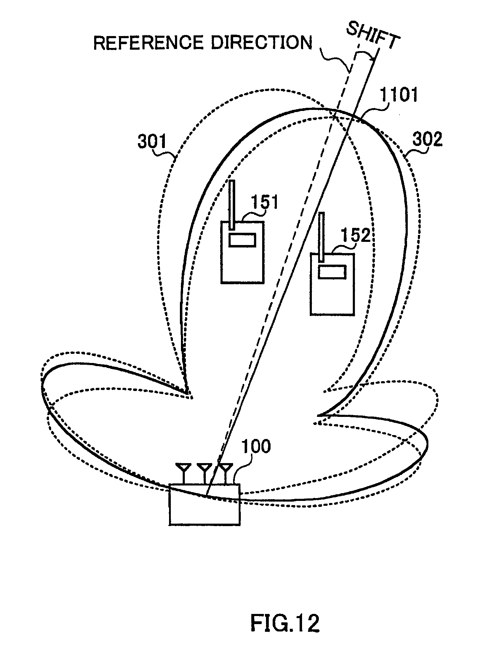

With reference now to FIG.12, the operation of transmission weight generation by transmission weight generation circuit 1004 will be explained. FIG. 12 shows a common transmission directivity pattern generated considering differences in the channel state of each communication terminal apparatus. When decision circuit 1003 decides that the directions of arrival of the desired signals from the respective communication terminal apparatuses of the communication partner are close to each other, transmission weight generation circuit 1004 forms common transmission directivity in a direction considering differences in the channel state of each communication terminal apparatus. Here, a case where decision circuit 1003 decides that the channel state of communication terminal apparatus 152 is worse than the channel state of communication terminal apparatus 151 will be explained.

In the case where the channel state of communication terminal apparatus 152 is worse, directivity pattern 1101 is formed which has transmission directivity in a direction shifted from a reference direction (here, direction in the quasi-middle of communication terminal apparatuses 151 and 152) to a direction closer to communication terminal apparatus 152 in a bad communication state. By this means, compared to the case where transmission directivity is formed in the quasi-middle of communication terminal apparatuses 151 and 152, it is possible to secure a good communication state for communication terminal apparatus 152.

Thus, the base station apparatus of this embodiment forms transmission directivity in a direction shifted from a reference direction to a direction closer to a communication terminal apparatus in a bad communication state, and can thereby improve the communication state of the communication terminal apparatus in a bad communication state. This improves the communication state of the system as a whole.

This embodiment has described the case where the base station apparatus is communicating with two communication terminal apparatuses as an example, but there can be three or more communication terminal apparatuses communicating with the base station. In this case, it is possible to estimate the channel state of each communication terminal apparatus, shift the reference direction toward a direction closer to the communication terminal apparatus in the worst estimated channel state and form transmission directivity in the direction after the shift. Even if the directions of arrival of signals from three or more communication terminal apparatuses are close to one another, this makes it possible to improve the communication terminal apparatus in a bad estimated channel state and can thereby improve the communication state of the system as a whole.

### (Embodiment 6)

Embodiment 6 is an example of modification to Embodiment 3. In the case of Embodiment 3, when there is large interference between communication terminal apparatuses, transmission directivity is formed in a direction shifted from the directions of arrival of signals to a direction away from the communication terminal apparatus receiving interference. However, when there is a communication terminal apparatus in a good channel state, that communication terminal apparatus in a good channel state is considered to be resistant to interference. Thus, in this embodiment, the direction in which transmission directivity is formed is decided considering also the quality of the channel state. More specifically, when a communication terminal apparatus in a good channel state is an interfered terminal, in this embodiment, the width (angle) , by which transmission directivity used to send signals to the communication terminal apparatus that gives the interfered terminal is shifted, is reduced.

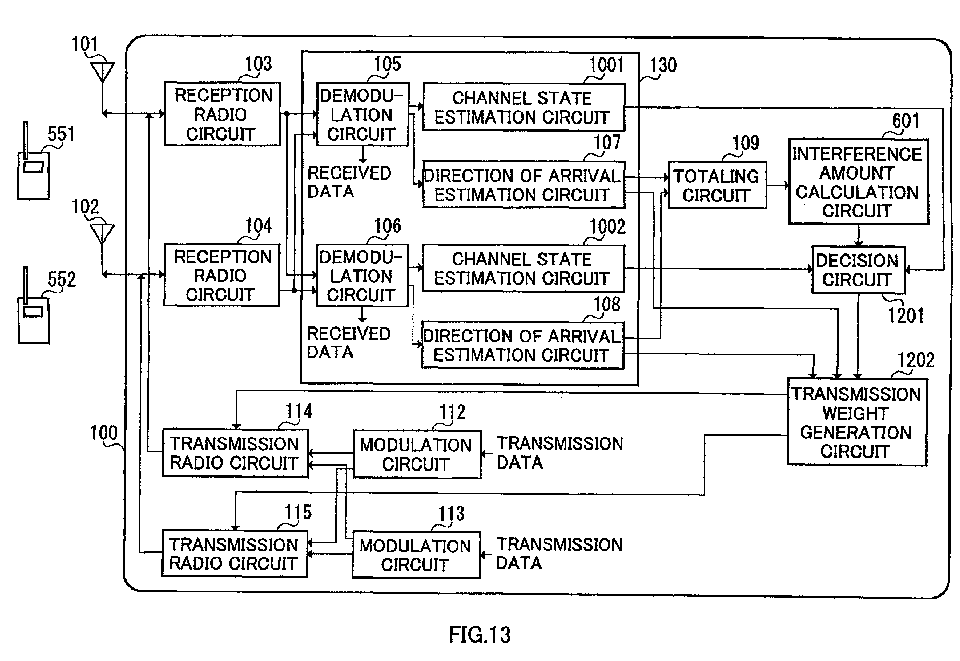

FIG.13 is a block diagram showing a configuration of a base station apparatus according to Embodiment 6 of the present invention. In FIG.13, the same components as those in FIG.7 are assigned the same reference numerals as those in FIG.7 and detailed explanations thereof will be omitted.

Channel state estimation circuits 1001 and 1002 detect the states of the channels from the respective communication terminal apparatuses to the base station apparatus based on the outputs of the demodulation circuits. The channel state can be recognized by, for example, demodulation circuits 105 and 106 referencing the TPC commands extracted from the received signals. That is, when the transmit power under the control of the TPC command is high, the channel state can be estimated to be bad and on the contrary when the transmit power under the control of the TPC command is low, the channel state can be estimated to be good.

Decision circuit 1201 determines the amount of interference calculated by interference amount calculation circuit 601 in comparison with a threshold. This threshold decision is performed by comparing inter-code interference generated among communication terminal apparatuses of the communication partner with an allowable amount of interference for the system (tolerance) to determine which is greater or smaller. This threshold decision result is output to transmission weight generation circuit 1202.

Furthermore, decision circuit 1201 is provided with a table showing the correspondence between the channel state estimation result and shift width of transmission directivity. Decision circuit 1201 reads the shift width corresponding to the channel state estimation result of communication terminal apparatus 151 output from channel state estimation circuit 1001 and the channel state estimation result of communication terminal apparatus 152 output from channel state estimation circuit 1002 from the table and outputs to transmission weight generation circuit 1202.

Here, the correspondence between the channel state detection result and shift width shown in the table provided for decision circuit 1201 will be explained. A communication terminal apparatus in a good channel state receives a strong desired signal even if it receives interference from other stations, and therefore that communication terminal apparatus is considered to be resistant to interference. Thus, in the case where a communication terminal apparatus in a good channel state is an interfered terminal, the width of a shift of transmission directivity used to send a signal to a communication terminal apparatus that causes interference with the interfered terminal is reduced. The better the channel state of the interfered terminal, the more resistant to interference, and therefore the better the channel state of the interfered terminal, the less the shift width is reduced. Since the signal sent using transmission directivity with a reduced shift width in this way is sent with transmission directivity more similar to desired transmission directivity, it is possible to improve the communication quality of the communication terminal apparatus that receives this signal.

When decision circuit 1201 decides that the amount of interference between communication terminal apparatuses 151 and 152 is greater than tolerance, transmission weight generation circuit 1202 forms transmission directivity in a direction shifted from the directions of arrival of the received signals to a direction away from the interfered communication terminal apparatus. Then, transmission weight generation circuit 1202 generates a transmission weight to implement the transmission weight formed. This transmission directivity is formed using the shift width for each communication terminal apparatus output from decision circuit 1201.

In the base station apparatus in the above-described configuration, channel state estimation circuits 1001 and 1002 reference the TPC command included in the received signal to detect the channel state . Decision circuit 1003 compares the amount of interference between communication terminal apparatuses of the communication partner with tolerance and decides which is greater or smaller. This decision result is output to transmission weight generation circuit 1202. Decision circuit 1201 also detects an interfered terminal.

Transmission weight generation circuit 1202 forms transmission directivity in the reference direction shifted by the shift width considering the difference in the channel state away from the interfered terminal detected by decision circuit 602.

Thus, when a communication terminal apparatus in a good channel state is an interfered terminal, in this embodiment, the shift width of transmission directivity for the communication terminal apparatus that causes interference with the interfered terminal is reduced. Thus, the signal sent using transmission directivity with the reduced shift width is sent with directivity closer to desired directivity, and therefore it is possible to improve the communication quality of the communication terminal apparatus that receives this signal.

In addition, Embodiment 5 and Embodiment 6 above have described the method of referencing a TPC command as the method of estimating the channel state, but the present invention is not limited to this and a method of using the downlink reception quality reported from the communication terminal apparatus can also be used.

As described above, when the directions of arrival of signals from a plurality of communication terminal apparatuses of the communication partner are close to one another, the base station apparatus of the present invention forms common transmission directivity for the respective communication terminal apparatuses, and therefore there is no need to generate a transmission weight for each communication terminal apparatus, which allows a drastic reduction in the amount of calculation.

Furthermore, the base station apparatus of the present invention forms common transmission directivity for a plurality of communication terminal apparatuses and send signals with the common transmission directivity, and can thereby send transmission signals orthogonalized for communication terminal apparatuses whose directions of arrival are close to one another, which can reduce inter-code interference between the communication terminal apparatuses.

Furthermore, upon detection of a communication terminal apparatus which is receiving interference in excess of a predetermined amount from other communication terminal apparatuses, the base station apparatus of the present invention forms transmission directivity in a reference direction shifted away from the communication terminal apparatus receiving interference in excess of the predetermined amount and sends signals with the transmission directivity, and can thereby reduce inter-code interference.

The base station apparatus of the present invention is constructed of a direction of arrival estimation section that estimates directions of arrival of signals from a plurality of communication terminal apparatuses, a first detection section that detects communication terminal apparatuses whose directions of arrival of signals are close to one another based on the estimated direction of arrival information, a formation section that forms transmission directivity common to the detected communication terminal apparatuses, and a transmission section that transmits signals by radio to the respective communication terminal apparatuses whose directions of arrival of signals are close to one another using the above-described common transmission directivity.

When the directions of arrival of signals from a plurality of communication terminal apparatuses of the communication partner are close to one another, the base station in this configuration forms transmission directivity common to the respective communication terminal apparatuses, and thereby eliminates the need to generate and multiply a transmission weight for each communication terminal apparatus, which allows a drastic reduction in the amount of calculation.

Furthermore, the base station in this configuration forms transmission directivity common to a plurality of communication terminal apparatuses and transmits signals with the common transmission directivity, and can thereby send transmission signals orthogonalized to communication terminal apparatuses whose directions of arrival of signals are close to each other. This makes it possible to reduce inter-code interference among the communication terminal apparatuses.

The above-described base station apparatus of the present invention adopts a configuration including a channel state estimation section that estimates a channel state for each communication terminal apparatus, with the formation section forming transmission directivity in a direction shifted from a reference direction determined by direction of arrival information to the direction of arrival of a signal from the communication terminal apparatus in the worst estimated channel state.

The base station in this configuration forms transmission directivity in a direction shifted from the reference direction to a direction closer to the communication terminal apparatus in a bad communication state, which makes it possible to improve the communication state of the communication terminal apparatus in a bad channel state preferentially, which makes it possible to improve the communication state of the system as a whole.

The base station apparatus of the present invention is constructed of a direction of arrival estimation section that estimates directions of arrival of signals from a plurality of communication terminal apparatuses, a calculation section that calculates the amount of interference that a communication terminal apparatus receives from other communication terminal apparatuses based on the estimated direction of arrival information, a second detection section that detects communication terminal apparatuses whose calculated amount of interference exceeds a predetermined value, a formation section that forms transmission directivity in a reference direction determined by the direction of arrival information shifted to a direction away from the communication terminal apparatuses detected by the second detection section, and a transmission section that transmits signals by radio to the above-described other communication terminal apparatuses using the formed transmission directivity.

Upon detection of a communication terminal apparatus receiving a predetermined amount or more of interference from other communication terminal apparatuses, the base station in this configuration forms transmission directivity in the reference direction shifted away from the communication terminal apparatus receiving the predetermined amount or more of interference and transmits signals with the transmission directivity, which makes it possible to reduce interference.

The above-described base station apparatus of the present invention adopts a configuration including a channel state estimation section that estimates a channel state for each communication terminal apparatus, with the formation section reducing the width of a shift from the reference direction as the channel state of the communication terminal apparatus detected by the second detection section improves.

When the channel state of the communication terminal apparatus whose calculated amount of interference is greater than a predetermined value is good, the base station in this configuration reduces the width of a shift of transmission directivity used for transmission to the other communication terminal apparatuses causing interference with this communication terminal apparatus. In this way, the signal sent with the transmission directivity with a reduced shift width is sent with transmission directivity closer to desired transmission directivity, making it possible to improve the communication quality of a communication terminal apparatus that receives this signal.

The above-described base station apparatus of the present invention is constructed in such a way that the direction of arrival estimation section estimates the direction of arrival of the signal from the communication terminal apparatus with reference to the position information on the own apparatus sent from the communication terminal apparatus and acquired by the own apparatus.

The base station apparatus in this configuration can recognize the direction of arrival of a signal by demodulating position information included in a received signal and thereby eliminate the need to perform direction of arrival estimation processing, which makes it possible to reduce the amount of processing for forming reception directivity and transmission directivity.

The radio transmission method of the present invention estimates the directions of arrival of signals from a plurality of communication terminal apparatuses, detects communication terminal apparatuses whose directions of arrival of signals are close to one another based on the estimated direction of arrival information, forms transmission directivity common to the detected communication terminal apparatuses, and transmits signals by radio to the respective communication terminal apparatuses whose directions of arrival of signals are close to one another using the above-described common transmission directivity.

When the directions of arrival of signals from a plurality of communication terminal apparatuses of the communication partner are close to one another, this method eliminates the need to generate a transmission weight for each communication terminal apparatus, which allows a drastic reduction in the amount of calculation. Furthermore, this method forms transmission directivity common to the plurality of communication terminal apparatuses and transmits signals with the common transmission directivity, and can thereby reduce inter-code interference among the communication terminal apparatuses.

The radio transmission method of the present invention estimates directions of arrival of signals from a plurality of communication terminal apparatuses, calculates the amount of interference that a communication terminal apparatus receives from other communication terminal apparatuses based on the estimated direction of arrival information, detects a communication terminal apparatus whose calculated amount of interference exceeds a predetermined value, forms transmission directivity in a reference direction determined by the direction of arrival information shifted away from the direction of arrival of the signal from the detected communication terminal apparatus, and transmits signals by radio to the above-described other communication terminal apparatuses using the formed transmission directivity.

Upon detection of a communication terminal apparatus receiving a predetermined amount or more of interference from other communication terminal apparatuses, this method forms transmission directivity in the reference direction shifted away from the direction of arrival of the signal from the communication terminal apparatus receiving the predetermined amount of interference and transmits signals with the transmission directivity, which makes it possible to reduce interference.

This application is based on the Japanese Patent Application No.2000-293644 filed on September 27, 2000, entire content of which is expressly incorporated by reference herein.

### Industrial Applicability

The present invention is applicable to a base station apparatus and a radio transmission method used in a digital radio communication system.

## Claims

1. A base station apparatus comprising:
direction of arrival estimating means for estimating directions of arrival of signals from a plurality of communication terminal apparatuses;
first detecting means for detecting communication terminal apparatuses whose directions of arrival of signals are close to one another based on the estimated direction of arrival information;
forming means for forming transmission directivity common to the detected communication terminal apparatuses; and
transmitting means for transmitting signals by radio to the respective communication terminal apparatuses whose directions of arrival of signals are close to one another using said common transmission directivity.

2. The base station apparatus according to claim 1, further comprising channel state estimating means for estimating a channel state for each communication terminal apparatus, wherein the forming means forms transmission directivity in a direction shifted from a reference direction determined by the direction of arrival information to a direction closer to the communication terminal apparatus in the worst estimated channel state.

3. A base station apparatus comprising:
direction of arrival estimating means for estimating directions of arrival of signals from a plurality of communication terminal apparatuses;
calculating means for calculating the amount of interference that a communication terminal apparatus receives from other communication terminal apparatuses based on the estimated direction of arrival information;
second detecting means for detecting communication terminal apparatuses whose calculated amount of interference exceeds a predetermined value;
forming means for forming transmission directivity in a reference direction determined by the direction of arrival information shifted away from the direction of arrival of the signals from the communication terminal apparatuses detected by the second detecting means; and
transmitting means for transmitting signals by radio to said other communication terminal apparatuses using the formed transmission directivity.

4. The base station apparatus according to claim 3, further comprising channel state estimating means for estimating a channel state for each communication terminal apparatus, wherein the forming means reduces the width of a shift from the reference direction as the channel state of the communication terminal apparatus detected by the second detecting means improves.

5. The base station apparatus according to claim 1, wherein the direction of arrival estimating means estimates the direction of arrival of the signal from the communication terminal apparatus with reference to the position information that relates to the communication terminal apparatus and that the apparatus itself obtains and sends out.

6. A radio transmission method comprising the steps of:
estimating the directions of arrival of signals from a plurality of communication terminal apparatuses;
detecting communication terminal apparatuses whose directions of arrival of signals are close to one another based on the estimated direction of arrival information;
forming transmission directivity common to the detected communication terminal apparatuses; and
transmitting signals by radio to the respective communication terminal apparatuses whose directions of arrival of signals are close to one another using said common transmission directivity.

7. A radio transmission method comprising the steps of:
estimating the directions of arrival of signals from a plurality of communication terminal apparatuses;
calculating the amount of interference that a communication terminal apparatus receives from other communication terminal apparatuses based on the estimated direction of arrival information;
detecting communication terminal apparatuses whose calculated amount of interference exceeds a predetermined value;
forming transmission directivity in a reference direction determined by the direction of arrival information shifted away from the direction of arrival of the signal from the detected communication terminal apparatuses; and
transmitting signals by radio to said other communication terminal apparatuses using the formed transmission directivity.
